# EUROPEAN PATENT APPLICATION

(11) **EP 4 822 512 A1**
(43) Date of publication of application: **14.10.2026**
(21) Application number: 26164291.2
(22) Date of filing: 12.03.2026
(51) Int. Cl.: G06F 3/147, G02F 1/1335, G06N 3/0475, G06T 11/60

(54) **DISPLAY SYSTEM AND CONTROL METHOD FOR INTERACTIVE IMAGE DISPLAY**

(30) Priority: 11.04.2025 US 202563786975 P; 24.09.2025 CN 202511368666
(71) Applicant: InnoLux Corporation, Jhu-Nan, Miao-Li County 350 (TW)
(72) Inventor: HSU, Yu-Chun, 350 Miao-Li County (TW); CHU, Wei-Ming, 350 Miao-Li County (TW)
(74) Representative: Straus, Alexander

(57) **Abstract**

A display system (10, 20) includes a sensor (170), a first image unit (110), a second image unit (160), and a display device (200). The sensor (170) receives an input signal from an external environment and outputs a prompt instruction (150). The first image unit (110) provides first image data (161). The second image unit (160) receives the first image data (161) and converts it into second image data (162) based on the prompt instruction (150). The display device (200) is coupled to the first image unit (110) and the second image unit (160), and includes a display module (440), an anti-glare layer (420), and an anti-reflective layer (410) stacked in sequence. The display device (200) displays a first image at a first time point (T1) and a second image at a second time point (T2), wherein (T2) is later than (T1).

## Description

### Field of the Disclosure

The present disclosure relates to a display system, and more particularly to an interactive display system combining Artificial Intelligence (AI) image processing and a special optical layer structure.

### Background of the Disclosure

In recent years, with the rapid development of Generative AI technology, users can effectively generate digital art works of various styles through AI drawing software or platforms. However, when these AI-generated image contents are presented on traditional display devices, most of them are static pictures, and users cannot interact with them, which limits the experience and application breadth of digital art.

In addition, when viewing digital art works on a display device, environmental light sources often produce specular reflection and glare on the surface of the display device, which reduces the visibility and contrast of the screen and affects the viewing quality. Therefore, how to integrate interactivity and improve the viewing experience is a challenge currently faced in the field of digital art display.

### Summary of the Disclosure

The present disclosure aims to provide a display system and a control method for interactive image display. The display system provides a new way for users to interact with digital content by integrating generative artificial intelligence technology with a special optical layer structure, thereby achieving interactivity of images and a high-quality visual experience.

This is achieved by a display system and a control method thereof according to the independent claims here below. The dependent claims pertain to corresponding further developments and improvements.

### Brief Description of the Drawings

In the following, the disclosure is further illustrated by way of example, taking reference to the accompanying drawings. Thereof:
FIG. 1 illustrates a functional block schematic diagram of a display system according to an embodiment of the present disclosure;
FIG. 2 illustrates a functional block schematic diagram of a display system according to another embodiment of the present disclosure;
FIG. 3 illustrates a flowchart of a method for converting first image data into second image data in an embodiment of the present disclosure;
FIG. 4 illustrates a schematic timing diagram of a display system playing images in an embodiment of the present disclosure;
FIG. 5 illustrates a schematic timing diagram of a display system playing images in another embodiment of the present disclosure;
FIG. 6 illustrates schematic cross-sectional structural diagrams of three embodiments of a display device in the present disclosure;
FIG. 7 illustrates schematic cross-sectional diagrams of several different implementation modes of an anti-glare layer in the present disclosure;
FIG. 8 illustrates a schematic structural diagram of an anti-reflective layer in an embodiment of the present disclosure;
FIG. 9 illustrates a relationship diagram between a viewing angle and relative brightness of a display device in an embodiment of the present disclosure; and
FIG. 10 illustrates schematic diagrams of a structure of a display device and several implementation modes of a backlight module thereof in the present disclosure.

### Detailed Description

In the present disclosure, the display device may be any device employing the driving circuit of the present disclosure. For example, the display device may be a Liquid Crystal Display (LCD), an Organic Light Emitting Diode (OLED) display, a Quantum Dot Light Emitting Diode display, a mini-Light Emitting Diode or Micro-Light Emitting Diode display, or an Electrophoretic Display (EPD). The display device can be applied to televisions, computer screens, notebook computers, tablet computers, smartphones, wearable devices, vehicle displays, virtual reality devices, or augmented reality devices. In addition, the form of the display device can be flat, curved, flexible, rollable, or transparent.

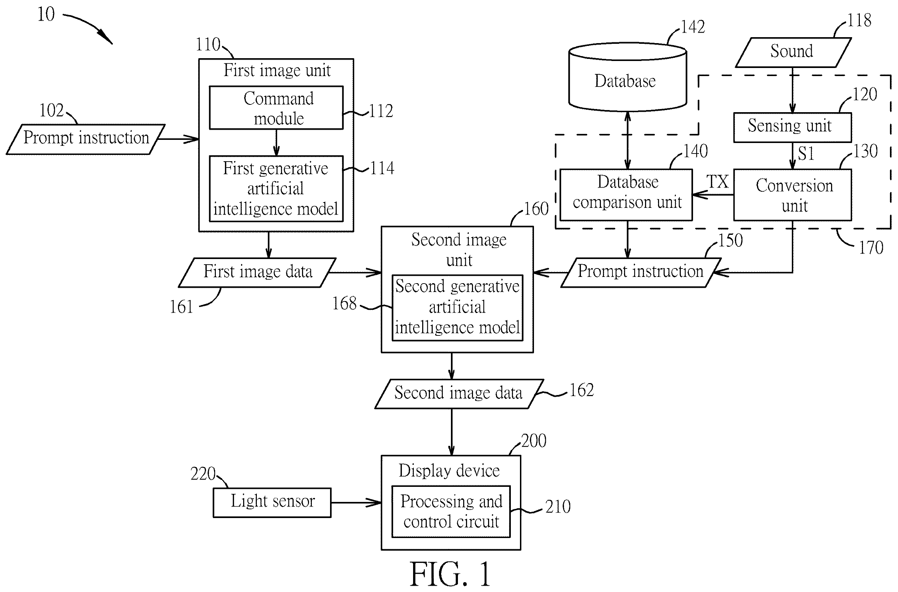

Please refer to FIG. 1, which illustrates a functional block schematic diagram of a display system 10 according to an embodiment of the present disclosure. The display system 10 can be applied to digital art frames, smart home displays, commercial billboards, or any occasion requiring high-quality and interactive image presentation. In this embodiment, the display system 10 comprises a first image unit 110, a sensor 170, a second image unit 160, and a display device 200. The first image unit 110 is configured to provide first image data 161. In some embodiments, the first image unit 110 may comprise a command module 112 and a first generative artificial intelligence model 114. A user can input a prompt instruction 102 through the command module 112, for example, by inputting a text description or uploading a reference picture. The first generative artificial intelligence model 114 (e.g., a diffusion model similar to Midjourney^{®} or Stable Diffusion^{®}) receives this prompt instruction 102 and can generate corresponding first image data 161 based on the prompt instruction 102. The first image data 161 can be static image data; it can also be dynamic image data. In other embodiments, the first image unit 110 may further include a storage module (not shown) configured to store pre-generated or externally loaded first image data 161 for direct selection by the user.

The sensor 170 is coupled to the second image unit 160 and is configured to receive an input signal from an external environment and to output a prompt instruction 150. In the embodiment of FIG. 1, the input signal from the external environment can be a sound 118. The sensor 170 comprises a sensing unit 120 and a conversion unit 130. The sensing unit 120, such as a microphone, is configured to detect and receive the sound 118 in the environment and output a sound signal S1. The conversion unit 130 is coupled to the sensing unit 120 and is configured to convert the sound signal S1 into the prompt instruction 150 understandable by the second image unit 160. This conversion process can be implemented in different ways. In one implementation, the conversion unit 130 can execute a Speech-to-Text algorithm to convert a voice command issued by the user into the prompt instruction 150 in text form. In another implementation, the conversion unit 130 can first preliminarily process the sound signal S1 to output text data TX, and transmit this text data TX to a database comparison unit 140. The database comparison unit 140 is coupled to a database 142, and specific sound keywords (e.g., "clap," "rain") and corresponding instruction parameters are pre-stored in the database 142. The database comparison unit 140 compares the received text data TX with data in the database 142 and generates the corresponding prompt instruction 150 based on the comparison result.

The second image unit 160 is coupled to the first image unit 110 and the sensor 170. The second image unit 160 receives the first image data 161 from the first image unit 110, and converts the first image data 161 into second image data 162 based on the prompt instruction 150 outputted by the sensor 170. Specifically, the second image unit 160 can comprise a second generative artificial intelligence model 168 (e.g., a text-to-video model similar to Sora). The second generative artificial intelligence model 168 uses the first image data 161 as a basis and generates the corresponding second image data 162 based on dynamic effects, scene changes, or interaction behaviors described by the prompt instruction 150. For example, in one embodiment, if the first image data 161 is a static painting of a bird perched on a branch, and the prompt instruction 150 describes a dynamic effect, the second generative artificial intelligence model 168 will generate a dynamic image as the second image data 162. In other embodiments, the second image data 162 can also be another static image data.

It should be explained that the first image unit 110 and the second image unit 160 can have various forms in physical implementation. In one embodiment, the first image unit 110 and the second image unit 160 can be units independent of each other. In another embodiment, the functions of the first image unit 110 and the second image unit 160 can be integrated into a single processor to achieve a more compact system design. In addition, in order to execute complex artificial intelligence model operations, the computing processing capability of the first image unit 110 or the second image unit 160 can be provided by a local computer or a remote cloud server.

The display device 200 is coupled to the first image unit 110 and the second image unit 160 and is configured to present images. The display device 200 comprises a processing and control circuit 210 configured to receive image data and drive the display screen. At a first time point, the display device 200 receives the first image data 161 and plays a corresponding first image (e.g., a static painting). After the user triggers the sensor 170 through the sound 118, the second image unit 160 generates the second image data 162, and the display device 200 receives this second image data 162 at a later second time point and plays a corresponding second image (e.g., a dynamic video), thereby achieving interactivity of images.

In addition, the display system 10 can further comprise a light sensor 220, which is coupled to the processing and control circuit 210 of the display device 200. The light sensor 220 is configured to detect an ambient light brightness and color temperature of the environment where the display device 200 is located. The processing and control circuit 210 can automatically adjust the backlight brightness and color performance of the display device 200 based on the detection result of the light sensor 220, so that the display screen can better blend into the surrounding environment, providing a more comfortable and natural viewing experience. The display device 200 has a visual texture approximating that of paper to provide a comfortable viewing experience. As to how to make the display device 200 have a visual texture approximating that of paper, it will be further described in the subsequent description.

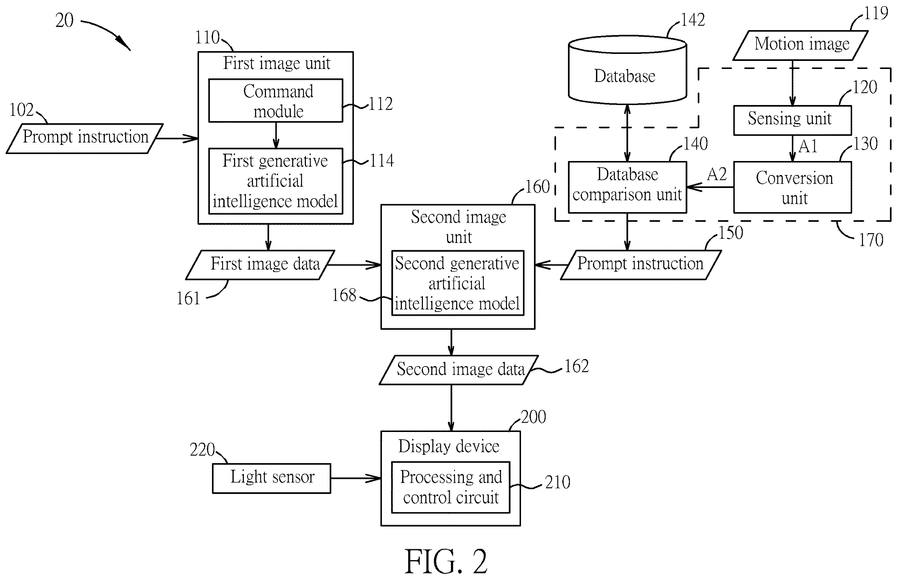

Please refer to FIG. 2, which illustrates a functional block schematic diagram of a display system 20 according to another embodiment of the present disclosure. The architecture of the display system 20 is substantially similar to the architecture of the display system 10 described in FIG. 1, also comprising the first image unit 110, the second image unit 160, the display device 200, and the sensor 170. The first image unit 110 generates the first image data 161 based on the prompt instruction 102 via the command module 112 and the first generative artificial intelligence model 114 therein. The second image unit 160 is coupled to the first image unit 110 and the sensor 170, and the second generative artificial intelligence model 168 converts the first image data 161 into the second image data 162 based on the prompt instruction 150 from the sensor 170. The display device 200 receives and plays images through its processing and control circuit 210, and can be optionally equipped with the light sensor 220 to adjust the display effect.

The main difference between the display system 20 and the display system 10 lies in the detection target and processing flow of the sensor 170. In this embodiment, the sensor 170 is configured to receive a motion image 119 from the external environment as an input signal. Specifically, the sensing unit 120 in the sensor 170 can be a camera or other image capturing device configured to capture the motion image 119 in the surrounding environment, such as specific gestures, body movements, or facial expressions of the user, and output an image signal A1. The image signal A1 is transmitted to the conversion unit 130. In this embodiment, the conversion unit 130 can be a Human Action Recognition (HAR) tool or module configured to execute, for example, an algorithm similar to MediaPipe. The conversion unit 130 analyzes the received image signal A1 to recognize a specific action contained therein, and outputs motion data A2 representing the recognized action. Next, the motion data A2 is transmitted to the database comparison unit 140. The database comparison unit 140 is coupled to the database 142, and the database 142 pre-stores a plurality of motion data and their corresponding instruction parameters. The database comparison unit 140 compares the received motion data A2 with data in the database 142, generates the corresponding prompt instruction 150 based on the comparison result, and transmits the prompt instruction 150 to the second image unit 160.

For example, when the display device 200 is displaying a static forest landscape painting (e.g., the first image data 161), the user waves a hand in front of it. The sensing unit (e.g., camera) 120 captures this waving action (i.e., the motion image 119), and the conversion unit (e.g., HAR tool) 130 recognizes it as a "waving" action. After comparison by the database comparison unit 140, it is confirmed that "waving" corresponds to an instruction of "letting leaves flutter in the wind," thereby generating this prompt instruction 150. After the second generative artificial intelligence model 168 of the second image unit 160 receives the instruction, it will convert the original static forest image into a dynamic image of leaves swaying in the wind (e.g., the second image data 162), which is played by the display device 200, thereby achieving interaction with digital art works through body movements.

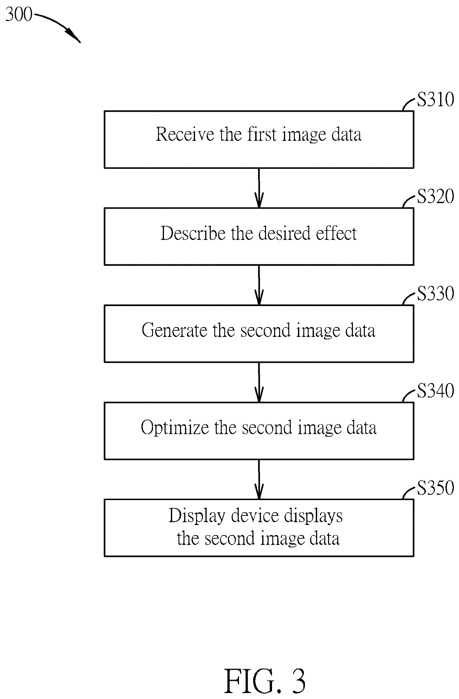

Please refer to FIG. 3, which illustrates a flowchart 300 of a method for converting first image data into second image data in an embodiment of the present disclosure. This flow can be executed by the second image unit 160 in the aforementioned embodiments to generate interactive dynamic images. First, in step S310, the system receives first image data. This first image data can be a static image, such as a painting of a bird perched on a branch. Next, in step S320, the user can describe a dynamic effect to be converted for this first image data in natural language. This description can contain multiple levels; for example, the user can define a main action (e.g., "let the bird take off from the branch"), detail features (e.g., "the bird's wings should flap according to physical laws"), background effects (e.g., "the background should have a slight blur effect to create a sense of motion"), and video length (e.g., "video duration is about five seconds"). After receiving the user's description, in step S330, the generative artificial intelligence model (e.g., the second generative artificial intelligence model 168) in the system generates corresponding second image data, such as a dynamic video, based on the first image data and the effect described by the user. Subsequently, in step S340, the second image data can be optimized. For example, if the user is not satisfied with the preliminarily generated dynamic image, further optimization instructions can be provided for fine-tuning. For example, the user can request to "speed up or slow down the bird's flight speed," "adjust the intensity of background blur or wind blowing effects," or even "fine-tune the frequency and speed of the bird's wing flapping." The user can also add new elements, such as "adding sound effects like bird calls and breeze," or adjust the length of the video. Afterward, in step S350, the generated and optimized second image data is transmitted to the display device and played, according to the specific interactive visual effect generated based on the user input.

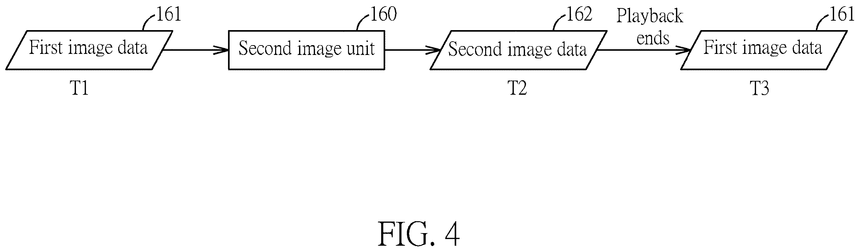

Please refer to FIG. 1 to FIG. 4 together. FIG. 4 illustrates a schematic timing diagram of the display system 10 or 20 playing images in an embodiment of the present disclosure. This flow shows how to convert from an initial image to an interactive image and return to the initial state after the interaction ends. At the beginning of the flow, at a first time point T1, the display device 200 receives and plays a first image corresponding to the first image data 161. This first image is usually a static image, such as a digital painting, providing the user with a stable viewing screen. Next, when the sensor 170 receives a trigger signal from the external environment (e.g., the sound 118 or the motion image 119), the second image unit 160 converts the first image data 161 into second image data 162 based on the prompt instruction 150 generated by the trigger signal. Subsequently, at a second time point T2 later than the first time point T1, the display device 200 receives the second image data 162 provided by the second image unit 160 and plays a corresponding second image. This second image can be a dynamic image, realizing an interactive effect corresponding to the user's trigger behavior. After the second image (e.g., dynamic video) finishes playing, at a third time point T3, the display device 200 stops playing the second image and replays the first image corresponding to the first image data 161. In other words, the screen displayed by the display device 200 returns to the initial static state before interaction. The third time point T3 is later than the second time point T2.

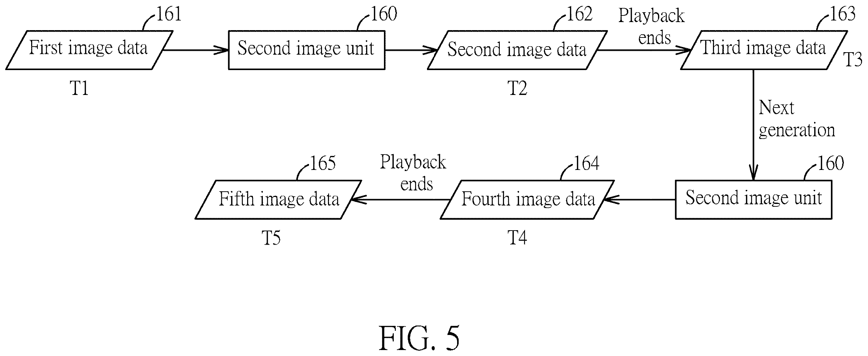

Please refer to FIG. 5 again, which illustrates a schematic timing diagram of the display system 10 or 20 playing images in another embodiment of the present disclosure. This flow shows a continuous image generation and playback method, which is different from the flow of returning to the initial state shown in FIG. 4. At a first time point T1, the display device 200 plays a first image corresponding to the first image data 161. After receiving a trigger signal from the user, the second image unit 160 processes this first image data 161, and generates second image data 162 at a second time point T2, and the display device 200 plays a corresponding second image, wherein this second image can be a dynamic interactive image. After the second image finishes playing, at a third time point T3, the display device 200 plays a third image corresponding to third image data 163. Wherein, the third image data 163 can be static image data. The third image data 163 can be an ending screen of the second image data 162 (dynamic image) or a derivative result, and its screen content may be different from the original first image data 161. Next, the third image data 163 can serve as a reference basis for the next generation. When the user triggers interaction again, the second image unit 160 uses the third image data 163 as its input image data, and based on a new prompt instruction, generates another new dynamic image at a fourth time point T4, i.e., fourth image data 164, and the display device 200 plays a corresponding fourth image. After the fourth image finishes playing, at a fifth time point T5, the display device 200 plays a fifth image corresponding to fifth image data 165. The fifth image data 165 can be an ending screen of the fourth image data 164 (dynamic image) or a derivative result, and its screen content may be different from the original third image data 163. Wherein, the third time point T3 is later than the second time point T2, the fourth time point T4 is later than the third time point T3, and the fifth time point T5 is later than the fourth time point T4.

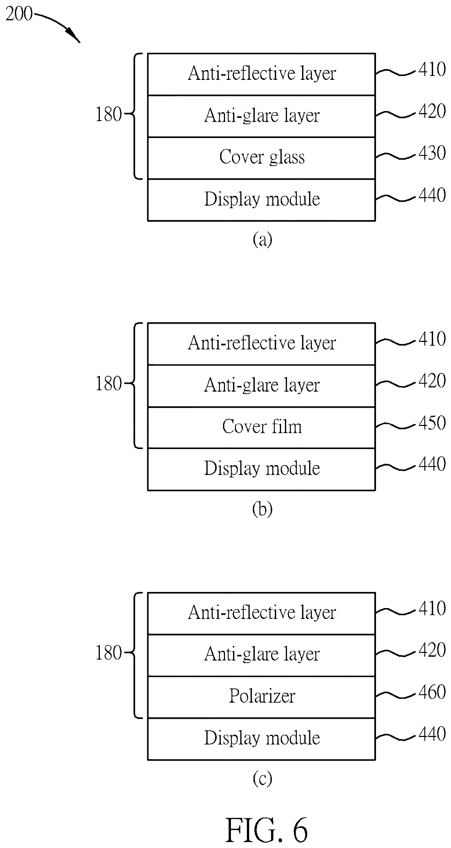

In order to make the display device 200 present a visual texture approximating that of paper and provide a comfortable viewing experience, the present disclosure proposes an effective surface optical treatment structure to effectively reduce specular reflection and glare caused by ambient light. Please refer to FIG. 6, which illustrates schematic cross-sectional structural diagrams of three embodiments of the display device 200 in the present disclosure.

Please refer to part (a) of FIG. 6, which illustrates a structure of the display device 200. This display device 200 comprises a display module 440 and a cover 180 disposed thereon. The display module 440 serves as a basis for providing image screens and can be a Liquid Crystal Display (LCD) module, an Organic Light Emitting Diode (OLED) module, a mini-LED or Micro-LED module, a Cholesteric Liquid Crystal Display (ChLCD), or an Electrophoretic Display (EPD). In this embodiment, the cover 180 comprises a cover glass 430, an anti-glare layer (AG Layer) 420 formed on the cover glass 430, and an anti-reflective layer (AR Layer) 410 formed on the anti-glare layer 420. Wherein, the anti-reflective layer 410 can adopt smoke or non-smoke anti-reflective technology. Light of an image generated by the display module 440 sequentially passes through the cover glass 430, the anti-glare layer 420, and the anti-reflective layer 410.

Please refer to part (b) of FIG. 6, which illustrates a structural variation of another display device 200. This structure is similar to the structure of part (a) of FIG. 6, and the main difference lies in the substrate of the cover 180. In this embodiment, a cover film 450 replaces the aforementioned cover glass 430. Specifically, its laminated structure from bottom to top is sequentially the display module 440, the cover film 450, the anti-glare layer 420, and the anti-reflective layer 410.

Please refer to part (c) of FIG. 6, which shows another implementation mode. In this structure, the anti-glare layer 420 and the anti-reflective layer 410 are directly integrated with a polarizer 460. The polarizer 460 is disposed on the display module 440. In other words, the laminated structure of this embodiment from bottom to top is sequentially the display module 440, the polarizer 460, the anti-glare layer 420, and the anti-reflective layer 410. This integrated design can simplify the manufacturing process and reduce the number of component layers. In the aforementioned embodiments, the combination constituted by the anti-reflective layer 410, the anti-glare layer 420, and the cover glass 430, the cover film 450, or the polarizer 460 can be collectively referred to as the cover 180.

In order to achieve a paper-like visual effect, optical characteristics of the aforementioned structure are precisely regulated. For example, for the cover film 450 or the cover glass 430 combined with the anti-glare layer 420 (which can also be referred to as anti-glare film or anti-glare glass), its glossiness can be between 10 GU (Gloss Unit) and 50 GU, and its transmittance can be greater than 90%. As for the polarizer 460 combined with the anti-glare layer 420 (which can also be referred to as an anti-glare polarizer), its glossiness can also be between 10 GU and 50 GU, but due to characteristics of the polarizer itself, its transmittance is in a range of about 40% to 60%.

Overall, the glossiness of the cover 180 can be designed in a range of 5 GU to 50 GU, for example, between 4 GU and 35 GU, 4 GU and 30 GU, or 4 GU and 20 GU; its transmittance can be between 70% and 95%; and its specular component included (SCI) reflectance can be less than or equal to 6%, for example, 3% to 6% or 4% to 6%.

In addition, the overall glossiness of the display device 200 can be less than 10 GU (e.g., 5 GU) to present a low-reflection matte texture. Its total specular component included (SCI) reflectance can be less than 3%. In addition, in order to ensure image clarity and effectively scatter ambient light, its specular component excluded (SCE) reflectance should occupy a certain proportion relative to the total SCI reflectance. Specifically, for the display device 200, its specular component excluded (SCE) reflectance can be greater than 0.6 times its specular component included (SCI) reflectance.

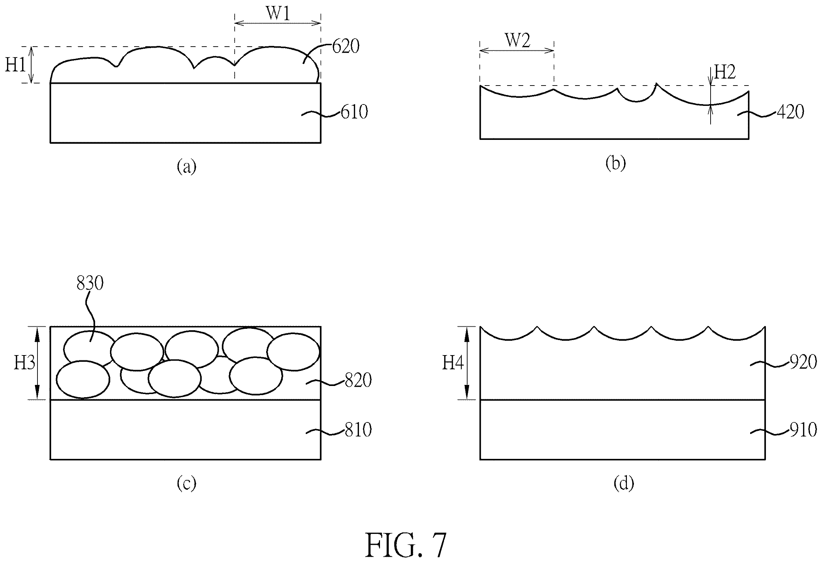

The aforementioned anti-glare layer 420 is one of the main structures for realizing the paper-like visual effect, and its purpose is to scatter incident light rays through specific surface topography, thereby reducing glare. Please refer to FIG. 7, which illustrates schematic cross-sectional diagrams of several different implementation modes for forming the anti-glare layer 420 in the present disclosure. These structures can be applied to substrates such as cover glass or cover film. Please refer to part (a) of FIG. 7; the anti-glare layer 420 can comprise a substrate 610 and a spray anti-glare layer 620. The material of the spray anti-glare layer 620 can be substances such as silicon dioxide, and the material of the substrate 610 can be light-transmissive substances such as glass or plastic. The spray anti-glare layer 620 is formed on the substrate 610 by spraying, and the surface of the spray anti-glare layer 620 has minute concavities and convexities to increase diffuse reflection of light and reduce specular reflection of light. Structural features of the surface of the spray anti-glare layer 620 can be described by a width W1 and a thickness H1, wherein the thickness H1 can be between 0.1 micrometers and 0.5 micrometers, and the width W1 can be between 5 micrometers and 20 micrometers. Please refer to part (b) of FIG. 7; in another embodiment, the surface of the anti-glare layer 420 has minute concavities and convexities formed by mechanical machining or chemical etching. Structural features of these minute concavities and convexities can be defined by a width W2 and a depth H2 of the depressions, wherein the depth H2 can be between 0.1 micrometers and 0.5 micrometers, and the width W2 can be between 5 micrometers and 20 micrometers. Please refer to part (c) of FIG. 7; in another embodiment, the anti-glare layer 420 comprises a substrate 810 and a structural layer 820, and there are multiple silicon dioxide particles 830 in the structural layer 820. The material of the structural layer 820 can be polymethyl methacrylate and mixtures thereof, and the material of the substrate 810 can be light-transmissive substances such as glass or plastic. A range of a thickness H3 of the structural layer 820 can be, for example, 1 micrometer to 3 micrometers. Please refer to part (d) of FIG. 7; in another embodiment, the anti-glare layer 420 comprises a substrate 910 and a hard coating layer 920, and the hard coating layer 920 is formed on the substrate 910 by a spray coating process, Physical Vapor Deposition (PVD), Chemical Vapor Deposition (CVD), or a sol-gel method. In some embodiments, a rough surface possessed by the hard coating layer 920 can be formed by performing a nano-imprint process on the hard coating layer. In other embodiments, the rough surface possessed by the hard coating layer 920 can be formed by performing an etching process on the hard coating layer. The material of the substrate 910 can be light-transmissive substances such as glass or plastic, and the material of the hard coating layer 920 can be substances capable of creating concave and convex surface topography, such as curable resin (e.g., photo-curable resin or thermo-curable resin) doped with multiple silicon dioxide particles. A thickness H4 of the hard coating layer 920 can be in a range of 1 micrometer to 3 micrometers.

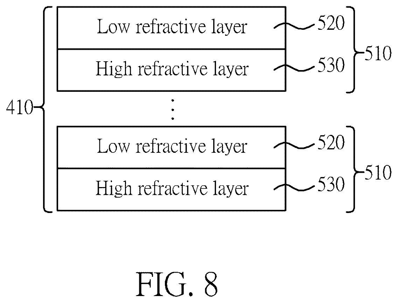

In order to reduce surface reflection, the anti-reflective layer 410 can adopt a multilayer film stack structure. Please refer to FIG. 8, which illustrates a schematic structural diagram of the anti-reflective layer 410 in FIG. 6. In one embodiment, the anti-reflective layer 410 can be formed by alternately stacking metal oxides or dielectric materials having high refractive indices and low refractive indices on the surface of the anti-glare layer via Physical Vapor Deposition (PVD) technology. As shown in the figure, the anti-reflective layer 410 can comprise at least two sets of anti-reflective modules 510. In one embodiment, the anti-reflective layer 410 can comprise four or more sets of anti-reflective modules 510. Each anti-reflective module 510 contains a high refractive index layer 530 and a low refractive index layer 520. Both the low refractive index layer 520 and the high refractive index layer 530 are light-transmissive thin film structures, and the refractive index of the high refractive index layer 530 is greater than the refractive index of the low refractive index layer 520. For example, the refractive index of the high refractive index layer 530 can be between 2.0 and 2.5, and the refractive index of the low refractive index layer 520 can be between 1.0 and 1.5. The material of the high refractive index layer 530 can be selected from light-transmissive substances such as silicon nitride (SiNₓ), niobium pentoxide (Nb₂O₅), titanium dioxide (TiO₂), tantalum pentoxide (Ta₂O₅), and indium tin oxide (ITO). The material of the low refractive index layer 520 can be selected from light-transmissive substances such as silicon dioxide (SiO₂), magnesium fluoride (MgF₂), and calcium fluoride (CaF₂).

The anti-reflective layer 410 can be distinguished into a non-smoke type and a smoke type. For the smoke type anti-reflective layer, the high refractive index material used therein has certain light absorption characteristics. Table 1 and Table 2 below respectively show specific stacking embodiments of the non-smoke anti-reflective layer and the smoke anti-reflective layer. It should be explained that the film layer stacking order in these tables is presented from bottom to top, that is, starting from the substrate at the bottom (e.g., glass substrate), each film layer is deposited sequentially upwards.

**(Table 1)**

| Non-smoke anti-reflective layer | Thickness (nm) |
|---|---|
| Low refractive index layer (520; SiO₂) | 86.7 |
| High refractive index layer (530; Nb₂O₅) | 110.5 |
| Low refractive index layer (520; SiO₂) | 36.0 |
| High refractive index layer (530; Nb₂O₅) | 11.7 |
| Substrate | - |

**(Table 2)**

| Smoke anti-reflective layer | Thickness (nm) |
|---|---|
| Low refractive index layer (520; SiO₂) | 84.2 |
| High refractive index layer (530; ITO) | 72.09 |
| Low refractive index layer (520; SiO₂) | 14.14 |
| High refractive index layer (530; ITO) | 25.73 |
| Low refractive index layer (520; SiO₂) | 134.55 |
| High refractive index layer (530; ITO) | 15.07 |
| Low refractive index layer (520; SiO₂) | 27.56 |
| High refractive index layer (530; ITO) | 259.91 |
| Low refractive index layer (520; SiO₂) | 24.96 |
| High refractive index layer (530; ITO) | 21.47 |
| Substrate | - |

As shown in Table 1, the non-smoke anti-reflective layer can be formed by alternately stacking silicon dioxide (SiO2) as the low refractive index layer 520 and niobium pentoxide (Nb2O5) as the high refractive index layer 530. As shown in Table 2, the smoke anti-reflective layer can use indium tin oxide (ITO) as the high refractive index layer 530. In this smoke embodiment, the material of the high refractive index layer 530 has an extinction coefficient (k), and its numerical range can be between 0.01 and 0.05. Through the aforementioned multilayer film stack design, the total thickness of the anti-reflective layer 410 can be in a range of 200 nanometers (nm) to 700 nanometers, and its total reflectance can be controlled in an interval of 3% to 6%, thereby effectively suppressing surface reflection and improving the clarity and contrast of the display screen.

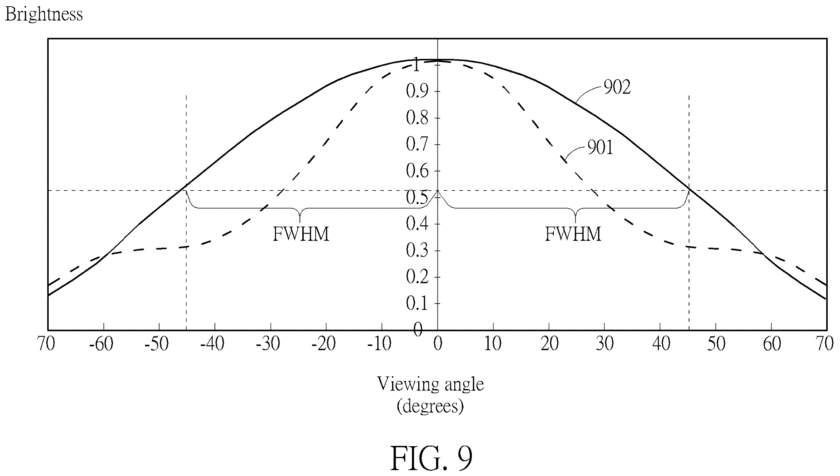

In order to further improve the viewing experience of the display device, especially when multiple people are viewing or when viewing digital art works from different angles, the present disclosure also optimizes the viewing angle characteristics of the display device. Please refer to FIG. 9, which illustrates a relationship diagram between a viewing angle and relative brightness of the display device in an embodiment of the present disclosure. The horizontal axis of FIG. 9 represents the viewing angle (degrees), and the vertical axis of FIG. 9 represents the relative brightness. Curve 901 represents viewing angle characteristics of a general display module, whose brightness decays rapidly with the increase of the viewing angle, presenting a narrower viewing angle range. Curve 902 represents viewing angle characteristics of the display module after optimization in an embodiment of the present disclosure. Here, Full Width at Half Maximum (FWHM) is used to quantify the viewing angle range, which is defined as an included angle width of viewing angles on the left and right sides relative to a 0-degree angle when brightness drops to half of a central brightness (0-degree angle). As shown in the figure, the optimized curve 902 has a wider FWHM, which means its brightness decay is gentler at larger viewing angles, and can provide a wider effective viewing range. In one embodiment, the FWHM of the display module can be greater than or equal to 40 degrees, thereby enabling the display screen to still maintain a clear and color-saturated visual effect when viewed at different angles, closer to a reading experience of real paper unrestricted by viewing angles.

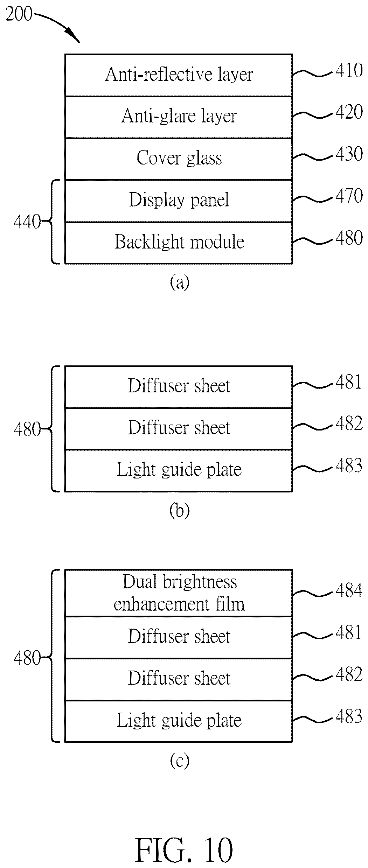

The above optimized viewing angle characteristics can be realized through structural design of a Backlight Unit (BLU). Please refer to FIG. 10, which illustrates schematic diagrams of the structure of the display device and several implementation modes of the backlight module thereof in the present disclosure. Part (a) of FIG. 10 illustrates a schematic diagram of an overall laminated structure of the display device, which can comprise a laminated structure of the display module 440, the cover glass 430, the anti-glare layer 420, and the anti-reflective layer 410. Wherein, the display module 440 comprises a backlight module 480 and a display panel 470, and the cover glass 430 can be replaced by a cover film or a polarizer. In addition, the structure of the backlight module 480 can be designed as follows to achieve the aforementioned wide viewing angle effect. Part (b) of FIG. 10 shows an optimized stack of the backlight module 480 (BLU Stack). This structure sequentially comprises, from bottom to top, a Light Guide Plate (LGP) 483, and at least two diffuser sheets stacked thereon, such as a diffuser sheet 482 located below and a diffuser sheet 481 located above. Through the design of multiple layers of diffuser sheets, light rays from the light guide plate 483 can be diffused more uniformly, thereby broadening a light output angle and achieving the goal of a wide viewing angle. Part (c) of FIG. 10 shows another optimized backlight module 480. Based on FIG. 10(b), this structure additionally adds a layer of Dual Brightness Enhancement Film (DBEF) 484. In other words, its structure from bottom to top is sequentially the light guide plate 483, the diffuser sheet 482, the diffuser sheet 481, and the dual brightness enhancement film 484. While maintaining a wide viewing angle, this design can also recycle part of the light rays to improve frontal brightness.

In summary, various implementation modes of the present disclosure provide an integrated display system. The display system can combine generative artificial intelligence technology and display optical technology. On the one hand, by receiving external trigger signals such as sound or motion through the sensor, the artificial intelligence model is driven to convert an initial image (e.g., a static image) into a dynamic image having an interactive effect. On the other hand, in order to provide a high-quality visual experience, the display device of the present disclosure can achieve display characteristics approximating paper, such as low glossiness, low reflectance, and wide viewing angle, through the sequentially stacked display module, anti-glare layer, and anti-reflective layer, and by optimizing its backlight module structure.

## Claims

1. A display system (10, 20) **characterized by** comprising:
a sensor (170) configured to receive an input signal from an external environment and to output a prompt instruction (150);
a first image unit (110) configured to provide first image data (161);
a second image unit (160) coupled to the first image unit (110) and the sensor (170), configured to receive the first image data (161) and convert the first image data (161) into second image data (162) based on the prompt instruction (150); and
a display device (200) coupled to the first image unit (110) and the second image unit (160), and comprising a display module (440), an anti-glare layer (420), and an anti-reflective layer (410) that are sequentially stacked, wherein the display device (200) is configured to receive the first image data (161) at a first time point (T1) and play a corresponding first image, and receive the second image data (162) at a second time point (T2) and play a corresponding second image;
wherein the second time point (T2) is later than the first time point (T1).

2. The display system (10, 20) of claim 1, **characterized in that** the corresponding first image is a static image, and the corresponding second image is a dynamic image.

3. The display system (10, 20) of any of claims 1 to 2, **characterized in that** the first image unit (110) comprises a first generative artificial intelligence model (114) configured to generate the first image data (161) based on an instruction (102) provided by a user.

4. The display system (10, 20) of any of claims 1 to 3, **characterized in that** the sensor (170) comprises a sensing unit (120) and a conversion unit (130), wherein the conversion unit (130) converts the input signal received by the sensing unit (120) into the prompt instruction (150).

5. The display system (10, 20) of any of claims 1 to 4, **characterized in that** the second image unit (160) comprises a second generative artificial intelligence model (168) configured to convert the first image data (161) into the second image data (162) based on the prompt instruction (150).

6. The display system (10, 20) of any of claims 1 to 5, **characterized in that** a glossiness of the display device (200) is less than 10 GU, and a specular component included reflectance of the display device (200) is less than 3%.

7. The display system (10, 20) of any of claims 1 to 6, **characterized in that** a specular component excluded reflectance of the display device (200) is greater than 0.6 times a specular component included reflectance of the display device (200).

8. A method for controlling a display system (10, 20) **characterized by** comprising:
providing first image data (161) by a first image unit (110);
receiving the first image data (161) by a display device (200) and playing a corresponding first image at a first time point (T1), wherein the display device (200) comprises a display module (440), an anti-glare layer (420), and an anti-reflective layer (410) that are sequentially stacked;
receiving an input signal from an external environment by a sensor (170) and outputting a prompt instruction (150);
receiving the first image data (161) by a second image unit (160) and converting the first image data (161) into second image data (162) based on the prompt instruction (150); and
receiving the second image data (162) by the display device (200) and playing a corresponding second image at a second time point (T2);
wherein the second time point (T2) is later than the first time point (T1).

9. The method of claim 8, **characterized in that** providing the first image data (161) comprises utilizing a first generative artificial intelligence model (114) to generate the first image data (161) based on an instruction (102) provided by a user.

10. The method of any of claims 8 to 9, **characterized in that** converting the first image data (161) into the second image data (162) comprises utilizing a second generative artificial intelligence model (168) to generate the second image data (162) based on the prompt instruction (150).

11. The method of any of claims 8 to 10, **characterized in that** the sensor (170) comprises a sensing unit (120) and a conversion unit (130), and the method further comprises converting, by the conversion unit (130), the input signal received by the sensing unit (120) into the prompt instruction (150).

12. The method of claim 11, **characterized in that** the input signal is a motion image (119), and converting the input signal into the prompt instruction (150) comprises analyzing the motion image (119) to recognize a specific action and comparing the specific action with data in a database (142) to generate the prompt instruction (150).

13. The method of any of claims 8 to 12, **characterized by** further comprising:
stopping playing the corresponding second image at a third time point (T3); and
replaying the corresponding first image by the display device (200);
wherein the third time point (T3) is later than the second time point (T2).

14. The method of any of claims 8 to 13, **characterized in that** a glossiness of the display device (200) is less than 10 GU, and a specular component included reflectance of the display device (200) is less than 3%.

15. The method of any of claims 8 to 14, **characterized in that** a specular component excluded reflectance of the display device (200) is greater than 0.6 times a specular component included reflectance of the display device (200).
